Europäisches Patentamt

(19) European Patent Office

Office européen des brevets

(11) **EP 1 408 055 A1**

(12) **EUROPEAN PATENT APPLICATION**
published in accordance with Art. 158(3) EPC

(43) Date of publication:
**14.04.2004 Bulletin 2004/16**

(51) Int Cl.⁷: **C08F 10/02**, C08F 8/00,
C08F 297/08, B29B 13/02

(21) Application number: **02733295.6**

(22) Date of filing: **04.06.2002**

(86) International application number:
**PCT/JP2002/005513**

(87) International publication number:
**WO 2003/004539 (16.01.2003 Gazette 2003/03)**

(84) Designated Contracting States:
**AT BE CH CY DE DK ES FI FR GB GR IE IT LI LU MC NL PT SE TR**

(30) Priority: **03.07.2001 JP 2001201971**

(71) Applicant: **IDEMITSU PETROCHEMICAL CO., LTD.**
**Tokyo 130-0015 (JP)**

(72) Inventors:
• **HIGUCHI, Hiroyuki**
**Ichihara-shi, Chiba 299-0107 (JP)**

• **OHTA, Katsutoshi**
**Ichihara-shi, Chiba 299-0107 (JP)**
• **SHINOHARA, Masayuki**
**Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(54) **POLYETHYLENE TYPE RESIN AND METHOD FOR PRODUCING THE SAME, AND INFLATION FILM USING THE SAME AS BASE MATERIAL**

(57)    The present invention is directed to a polyethylene resin having a density of 940-970 kg/m³ and a long-term relaxation component index of 1.5-10. The polyethylene resin exhibits, among other properties, excellent extrudability and bubble stability during blow film extrusion, and well-balanced physical properties of a film; e.g., impact resistance, and in particular, low unevenness in thickness. The polyethylene resin can provide a blown film having few gels.

EP 1 408 055 A1

**Description**

Technical Field

The present invention relates to a polyethylene resin, a method for producing the resin, and a blown film comprising the resin.

More particularly, the present invention relates to a polyethylene resin which exhibits excellent characteristics such as extrudability and bubble stability in the course of blown film processing and which provides blown film having well-balanced physical properties such as impact resistance and, particularly, low unevenness in thickness and having few gels which look like fish eyes (hereinafter may be abbreviated as FEs); to a method for producing the resin; and to a blown film comprising the resin as an essential component, the film having the above-described well-balanced physical properties, particularly, excellent uniformity in thickness.

Background Art

Polyethylene resins are general purpose resins which are used in a variety of fields. One typical use thereof is film.

Among the polyethylene resins, high-density polyethylene, which can form thin blown film having excellent mechanical strength, is suitable for wrapping material.

The above-mentioned blown film processing is a method which includes extruding high-density polyethylene in a molten state to a circular form from a circular die; solidifying the extruded material by cooling with air while the material is expanded by employing internal pressure; and continuously winding the solidified material.

In order to assure high productivity, blown film processing is required to be performed at a further high speed.

However, when the processing is performed at high speed, the formed film is ruptured as it is stretched, and spiral flow of the molten resin placed in the die is reflected in the flow at the outlet of the die (i.e., a spiral mark is generated), thereby failing to maintain uniformity in film thickness.

As a result, there arise the following among other problems: Wrinkles and sagging are generated in the film, to thereby lower or deteriorate printability and slit property in the course of a secondary film-processing step; the film meanders in a bag-making step; and the bag-making speed decreases and heat seal failure occurs. From another aspect, film productivity must be sacrificed so as to assure uniformity in film thickness.

In order to solve the above problems, a variety of countermeasures; e.g., use of rotary dies, enhancement of efficiency in cooling of bubbles through an internal cooling method, and narrowing of a die slip, have been conventionally employed from the aspects of molding and processing. However, at present these countermeasures cannot attain satisfactory physical properties of film.

There have been also proposed methods making use of a radical generator or a cross-linking agent during the course of kneading to produce film-forming material (as disclosed in, e.g., Japanese Patent Application Laid-Open (*kokai*) No. 60-161131).

When the above methods are employed, unevenness in thickness; i.e., failure to attain uniformity in film thickness, can be reduced. However, they have unfavorable effects; i.e., impact strength of the film decreases, and generation of gel during blown film extrusion deteriorates appearance of the film.

Japanese Patent Application Laid-Open (*kokai*) No. 7-276495 discloses a study on the relationship between a strain hardening parameter and unevenness in film thickness.

However, testing performed by the present inventors has revealed that, although the methods can reduce unevenness in film thickness, they fail to attain satisfactory anti-tube-breakage property and impact resistance during high-speed processing.

Japanese Patent Application Laid-Open (*kokai*) No. 8-90633 discloses a method in which a polyethylene resin which has been produced in the presence of a chromium-containing catalyst is modified by use of an oxygen-containing gas.

However, the above modification method also has drawbacks. Specifically, high-molecular-weight polyethylene is formed through cross-linking reaction, thereby increasing viscosity of polyethylene, resulting in a decrease in the amount extruded during blown film processing and an increase in motor load. In addition, formation of high-molecular-weight polyethylene generates gels in the film, thereby deteriorating film quality considerably.

Japanese Patent Application Laid-Open (*kokai*) No. 11-71427 discloses a technique for pelletizing polyethylene at a specific oxygen concentration in order to reduce unevenness in film thickness.

However, when the above technique is employed, gel is generated in the film, rendering the film quality unsatisfactory.

In view of the foregoing, an object of the present invention is to provide a polyethylene resin which exhibits excellent characteristics such as extrudability and bubble stability during blown film processing and which provides blown film having well-balanced physical properties such as impact resistance and, particularly, low unevenness in thickness and having few gels. Another object of the invention is to provide a method for producing the resin. Still another object is to provide a blown film comprising the resin as an essential component, the film having the above-described well-balanced physical properties, in particular, excellent uniformity in thickness.

Disclosure of the Invention

The present inventors have carried out extensive studies in order to attain the above-described objects, and have found that a polyethylene resin having a density of 940-970 kg/m$^3$ and a long-term relaxation component index of 1.5-10 is suitable for blown film processing, since the polyethylene resin has well-balanced characteristics; i.e., excellent blown film processability (e.g., extrudability and bubble stability) and excellent physical properties of a film produced therefrom (e.g., impact resistance and few gels), and can provide blown film having considerably suppressed unevenness in thickness.

The present invention has been accomplished on the basis of this finding.

Accordingly, the present invention provides a polyethylene resin for blown film processing, the resin having been produced in the presence of a Ziegler-type catalyst; having a density of 940-970 kg/m$^3$; and having a long-term relaxation component index of 1.5-10. The invention also provides a method for producing the polyethylene resin.

The present invention also provides a blown film comprising, as an essential component, a modified polyethylene resin which has been produced by the above-described method.

Brief Description of the Drawings

Fig. 1 is a sketch of an extruder employed in Examples 1 and 2.

Fig. 2(a) is a sketch of an extruder employed in Example 3, and Fig. 2(b) is an enlarged view of a portion of the extruder. Reference numerals in Fig. 2 denote: 1: SUS container, 2: Feeder, and 3: Chute.

Best Modes for Carrying Out the Invention

In the method for producing a polyethylene resin of the present invention, an ethylene resin which has been produced in the presence of a Ziegler-type catalyst is fed to an extruder.

Specifically, an ethylene resin which has been produced by polymerizing ethylene or ethylene and α-olefin in the presence of a Ziegler-type catalyst containing a transition metal component such as titanium, an organic aluminum compound, etc. is employed.

Preferably, a Ziegler-type catalyst on carrier is employed; i.e., the catalyst predominantly containing a solid catalyst component (magnesium, titanium, and halogen) and an organic aluminum compound.

Examples of the type of polymerization which may be used in the present invention include solution polymerization, slurry polymerization, and gas-phase polymerization. Of these, slurry polymerization is preferred in that molecular weight distribution can be easily controlled.

When solution polymerization or slurry polymerization is employed, an inert hydrocarbon may be used as a solvent, or the olefin itself may serve as a solvent.

Examples of the inert hydrocarbon solvent include aliphatic hydrocarbons such as butane, isobutane, pentane, hexane, octane, decane, dodecane, hexadecane, and octadecane; alicyclic hydrocarbons such as cyclopentane, methylcyclopentane, cyclohexane, and cyclooctane; aromatic hydrocarbons such as benzene, toluene, and xylene; and petroleum fractions such as gasoline, kerosene, and gas oil.

Among these inert hydrocarbon solvents, solvents such as aliphatic hydrocarbons, alicyclic hydrocarbons, and petroleum fractions are preferred.

The polyethylene resin of the present invention has the following properties.

Firstly, the density of the resin falls within a range of 940 to 970 kg/m$^3$.

When the density is less than 940 kg/m$^3$, rigidity becomes unsatisfactory, whereas when the density is in excess of 970 kg/m$^3$, impact strength decreases.

From the viewpoints of rigidity, impact resistance, etc., the density preferably falls within a range of 945 to 965 kg/m$^3$, particularly preferably 945 to 960 kg/m$^3$.

Secondly, the long-term relaxation component index of the resin falls within a range of 1.5-10.

Long-term relaxation component index values of 1.5 or more increase bubble stability and decrease unevenness in thickness. When the index is less than 1.5, unevenness in thickness is not sufficiently reduced, whereas when the index is in excess of 10, the number of gels increases and extrudability may deteriorate.

Preferably, the long-term relaxation component index falls within a range of 1.5-5.

The term "long-term relaxation component" literally refers to a component which exhibits a long relaxation time, and in the present invention, refers to a component which relaxes at a frequency of 0.01 sec$^{-1}$ or less.

The relaxation time of a component contained in typical linear polymer prolongs as the molecular weight of the polymer increases, since the degree of entanglement of molecular chains is elevated.

The long-term relaxation component index represents a ratio of a measured amount of the component relaxing at a frequency of 0.01 sec$^{-1}$ or less to an amount of the component relaxing at a frequency of 0.01 sec$^{-1}$ or less, the latter amount being predicted on the basis of the molecular weight distribution.

Typical linear polymers exhibit a long-term relaxation component index of 1. However, if a polymer contains, due to long chain branching or cross-linking, a component having chain entanglement stronger than that of a liner polymer, the long-term relaxation component index exceeds 1.

In other words, a polyethylene resin having a greater long-term relaxation component index is considered to contain a larger amount of a long-term relaxation component, as compared with a similar resin having molecular weight distribution identical with that of the polyethylene resin.

The strain hardening index preferably falls within a range of 1-8, and/or the percentage of hexane-soluble components is preferably 1.5 weight% or less. When the strain hardening index is in excess of 8 or the percentage of hexane-soluble components is in excess of 1.5 wt.%, impact strength may deteriorate.

More preferably, the strain hardening index falls within a range of 1-6, and the percentage of hexane-soluble components is 1.2 weight% or less.

In general, a molten resin is hardened when strain is applied thereto. The strain hardening index represents the degree of the above type of hardening.

In other words, material which is readily hardened has a greater strain hardening index. When the strain hardening index increases excessively, MD orientation of film increases, thereby possibly deteriorating impact resistance.

The polyethylene resin employed in the present invention may be a polyethylene produced through homopolymerization or an ethylene resin comprising at least two components; i.e., polyethylene (A) and polyethylene (B). The ethylene resin is more preferred, since the resin provides a material having excellent extrudability and high-speed processability.

In the above case, polyethylene (A) and polyethylene (B) must be mixed uniformly.

Therefore, preferably, a powder comprising polyethylene (A) and polyethylene (B) which have been produced in advance is dry-blended, followed by sufficiently melt-kneading of the blended product, to thereby produce the polyethylene resin.

The above procedure is preferable, because when pellets of polyethylene (A) and those of polyethylene (B) are dry-blended, these two components are not sufficiently mixed uniformly, thereby failing to exhibit assured bubble stability in the course of film formation and possibly generating a large number of gels in the film.

Another preferable method for obtaining a sufficiently uniform mixture of two components sufficiently is a continuous multi-step polymerization including at least two steps.

When this method is employed, preferably, polyethylene (A) is produced in a first step, and polyethylene (B) is produced in a second step.

The above described polyethylene (A) generally has a melt flow rate (as measured at 190°C with a load of 21.18 N) (hereinafter abbreviated as MFR$_2$) of 40-2,000 g/10 min, preferably 50-1,500 g/10 min, more preferably 100-1,000 g/10 min.

When MFR$_2$ is less than 40 g/10 min, there arises the risk of reduced flowability, whereas when it is in excess of 2,000 g/10 min, burnt resin generates at peripheral portions of a die set of an molding apparatus, concomitant with decrease in film strength and generation of gels in film in some cases.

Generally, polyethylene (A) preferably has a density of 930-985 kg/m$^3$, more preferably 950-985 kg/m$^3$, most preferably 960-985 kg/m$^3$.

When the density is less than 930 kg/m$^3$, rigidity of film may decrease. Polyethylene (A) is preferably formed of an ethylene homopolymer.

Polyethylene (B) may be an ethylene homopolymer or an ethylene copolymer. Preferably, polyethylene (B) is an ethylene-$\alpha$-olefin copolymer.

When polyethylene (B) having a molecular weight higher than that of polyethylene (A) is used and polyethylene (B) is an ethylene-$\alpha$-olefin copolymer, branching is introduced in the higher-moleculer-weight component of the ethylene resin comprising polyethylene (A) and polyethylene (B). As a result, the number of tie molecules increases, to thereby enhance film strength.

C3-C20 $\alpha$-olefins are preferred, with C4-C10 $\alpha$-olefins being particularly preferred. This is because use of such comonomers particularly increases the number of tie molecules.

In contrast, since more than C10 $\alpha$-olefin may exhibit deteriorated copolymerizability with ethylene, C10 $\alpha$-

olefin and less is preferably used.

Examples of the α-olefins include propylene, 1-butene, 1-pentene, 4-methyl-1-pentene, 1-hexene, 1-octene, and 1-decene. Of these, 1-butene is preferred.

The α-olefin content of the ethylene resin which comes into contact with an oxygen-containing gas in an extruder is preferably 2 mol% or less.

This is because film of a sufficient stiffness can be produced by employing such an α-olefin content. Insufficient stiffness tends to cause film formation failure.

The lower limit of the α-olefin content is preferably 0.05 mol%. When the α-olefin content is less than 0.05 mol%, impact resistance decreases in some cases.

The ratio by weight (mass) of polyethylene (A) to polyethylene (B) is preferably 30 : 70 to 70 : 30, more preferably 40 : 60 to 60 : 40, most preferably 50 : 50 to 60 : 40.

When the polyethylene (A) content is less than 30 weight% (based on the total amount of polyethylene (A) and polyethylene (B)), flowability decreases, whereas when the content is in excess of 70 weight%, gels possibly generate in the film.

The density of the entire polyethylene ((A) + (B)) is 940-970 $kg/m^3$, preferably 945-965 $kg/m^3$, more preferably 945-960 $kg/m^3$.

The long-term relaxation component index of the present invention can be readily controlled to 1.5-10 in the following manner.

Specifically, a polyethylene resin produced through polymerization in the presence of a Ziegler-type catalyst is dried in the polymerization system. The dried resin is fed into an extruder substantially prohibiting contact with air. The fed resin is brought into contact with an oxygen-containing gas in the extruder. Subsequently, the resin is melt-kneaded, to thereby yield polyethylene resin pellets.

Bringing the resin into contact with oxygen in the extruder is effective for controlling the long-term relaxation component index to 1.5 or more, while feeding of the resin into the extruder substantially prohibiting contact with air is effective for controlling the long-term relaxation component index to 10 or less.

Japanese Patent Application Laid-Open (*kokai*) No. 11-71427 discloses a technique for feeding polyethylene resin powder into an extruder under nitrogen and melt-kneading in an atmosphere of a specific oxygen concentration.

However, when the above technique is employed, the polyethylene resin powder inevitably comes into contact with air during feeding thereof into a hopper, and the long-term relaxation component index exceeds 10, thereby forming gel in the film.

In order to avoid contact between powdery polyethylene resin and air, a continuous process (polymerization-drying-kneading) of the resin in a system under nitrogen is desirably performed.

Japanese Patent Application Laid-Open (*kokai*) No. 8-90633 discloses a technique a similar technique to the present invention for modifying, with an oxygen-containing gas, a polyethylene resin which has been produced in the presence of a chromium-containing catalyst.

According to the above technique, tan δ, as measured at 190°C and an angular frequency of $1.5 \times 10^{-2}$ rad/sec, decreases after melt-kneading.

According to the present invention employing a polyethylene resin which has been produced through polymerization in the presence of a Ziegler-type catalyst, tan δ increases after melt-kneading.

In some cases, the polyethylene resin which has been produced in the presence of a chromium-containing catalyst may have a strain hardening index more than 8, possibly deteriorating impact resistance. Therefore, a polyethylene resin which has been produced through polymerization in the presence of a Ziegler-type catalyst is preferably used.

Twin screw extruders such as a same-direction-rotation twin screw extruder and an opposite-directions-rotation twin screw extruder are preferred in that the resin can be kneaded sufficiently.

Examples of same-direction-rotation twin screw extruders include TEX, CMP-X, and CMP-XII (products of Nihon Seiko-sho); TEM (product of Toshiba Kikai); KTX (product of Kobe Seiko-sho); and ZSK (product of Krupp Werner & Pfleiderer). Examples of opposite-directions-rotation twin screw extruders include CIM, CIM-P, and CIM-PII (products of Nihon Seiko-sho); and FCM, LCM-G, and LCM-H (product of Kobe Seiko-sho).

Other than these extruders, a tandem extruder, which consists of a combination of a plurality of these extruders (a second extruder may be a single screw extruder), may also be employed.

Contact with an oxygen-containing gas can be effected at any portions of an extruder; i.e., a hopper, a hopper chute, a solid matter transfer portion, and a plasticization portion.

Contact with an oxygen-containing gas in a feeder or a similar part of an extruder is also effective so long as the oxygen-containing gas is transferred with resin to the extruder.

The reason for the above is that the powdery resin in the feeder or in a similar part is thought to realize more uniform contact with the oxygen-containing gas.

Thus, a hopper, a hopper chute, and an solid matter transfer portion of an extruder are more preferred. In order to effectively transfer the polyethylene resin powder in the solid matter transfer portion and to mix the polyethylene resin more uniformly, the powder preferably has a bulk density of 0.2-0.6 g/cm$^3$, more preferably 0.3-0.4 g/cm$^3$.

The specific energy required for kneading is preferably 0.05-0.5 kw·h per kg of extruded polyethylene resin, more preferably 0.07-0.4 kw·h.

The oxygen concentration of the oxygen-containing gas is generally 0.5-50 vol.%, preferably 1-21 vol.%, more preferably 1-5 vol.%.

When the oxygen concentration is less than 0.5 vol.%, bubble stabilization might not be fully attained, whereas when the concentration is in excess of 50 vol.%, the produced modified polyethylene resin may possibly be yellowed and safety during production cannot be assured in some cases.

The oxygen concentration can be controlled by monitoring the concentration by means of an apparatus based on electrical conductivity or an oxygen-meter employing a gas chromatograph.

In the case in which an oxygen-containing mixture gas is brought into contact with polyethylene resin in a hopper, the sensor of the oxygen-meter is preferably provided inside the hopper or at the bottom (near the inlet) of the solid matter transfer portion of the extruder.

Before the polyethylene resin is molten, an antioxidant may be added in accordance with needs on a level of 4,000 ppm or less, preferably 3,000 ppm or less, more preferably 2,000 ppm or less.

The lower limit of the level of the antioxidant to be added is preferably 100 ppm.

The amount of the antioxidant is limited in the production method of the present invention, because excessive addition inhibits full attainment of the objects of the invention, some types of polyethylene resins and the resins may possibly be yellowed.

Examples of antioxidants which can be employed include phenolic stabilizers, organic phosphite stabilizers, thioether stabilizers, and hindered amine stabilizers.

Examples of the phenolic antioxidants include β-(3,5-di-t-butyl-4-hydroxyphenyl)propionic acid alkyl esters such as 2,6-di-t-butyl-4-methylphenol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-2-ethyl-6-t-octylphenol, 2-isobutyl-4-ethyl-5-t-hexylphenol, 2-cyclohexyl-4-n-butyl-6-isopropylphenol, styrenated cresol mixtures, dl-α-tocopherol, t-butylhydroquinone, 2,2'-methylenebis (4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 1,1,3-tris(2-methyl-4-hydroxy-5-t-butylphenyl)butane, triethylene glycol-bis[3-(3-t-butyl-5-methyl-4-hydroxyphenyl) propionate], 1,6-hexanediol-bis[3-(3,5-di-t-butyl-4-hydroxyphenyl) propionate], 2,2'-thiodiethylenebis[3-(3,5-di-t-butyl-4-hydroxyphenyl) propionate], N,N'-hexamethylenebis(3,5-di-t-butyl-4-hydroxy-hydrocinnamide), diethyl 3,5-di-t-butyl-4-hydroxybenzyl phosphonate, 1,3,5-tris(2,6-dimethyl-3-hydroxy-4-t-butylbenzyl) isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, 2,4-bis(n-octylthio)-6-(4-hydroxy-3,5-di-t-butylanilino)-1,3,5-triazine, tetrakis[methylene-3-(3,5-di-t-butyl-4-hydroxyphenyl) propionate] methane, calcium bis(ethyl 3,5-di-t-butyl-4-hydroxybenzylphosphonate), nickel bis(ethyl 3,5-di-t-butyl-4-hydroxybenzylphosphonate), bis[3,3-bis(3-t-butyl-4-hydroxyphenyl)butyric acid] glycol ester, N,N'-bis[3-(3,5-di-t-butyl-4-hydroxyphenyl)propionyl]hydrazine, 2,2'-oxamidobis[ethyl-3-(3,5-di-t-butyl-4-hydroxyphenyl) propionate], bis[2-t-butyl-4-methyl-6-(3-t-butyl-5-methyl-2-hydroxybenzyl)phenyl] terephthalate, 1,3,5-trimethyl-2,4,6-tris(3,5-di-t-butyl-4-hydroxybenzyl)benzene, 3,9-bis[1,1-dimethyl-2-[β-(3-t-butyl-4-hydroxy-5-methylphenyl)propionyloxy]ethyl]-2,4,8,10-tetraoxaspiro[5,5]undecane, 2,2-bis[4-[2-(3,5-di-t-butyl-4-hydroxyhydrocinnamoyloxy)]ethoxyphenyl]propane, and stearyl-β-(4-hydroxy-3,5-di-t-butylphenol) propionate. Of these, 2,6-di-t-butyl-4-methylphenol, stearyl-β-(4-hydroxy-3,5-di-t-butylphenol) propionate, 2,2'-ethylidenebis(4,6-di-t-butylphenol), and tetrakis[methylene-3-(3,5-di-t-butyl-4-hydroxyphenyl) propionate]methane are preferred.

Examples of the organic phosphite stabilizers include trioctyl phosphite, trilauryl phosphite, tristridecyl phosphite, trisisodecyl phosphite, phenyl diisooctyl phosphite, phenyl diisodecyl phosphite, phenyl di(tridecyl) phosphite, diphenyl isooctyl phosphite, diphenyl isodecyl phosphite, diphenyl tridecyl phosphite, triphenyl phosphite, tris(nonylphenyl) phosphite, tris(2,4-di-t-butylphenyl) phosphite, tris(butoxyethyl) phosphite, tetratridecyl-4,4'-butylidenebis (3-methyl-6-t-butylphenol) diphosphite, 4,4'-isopropylidene-diphenolalkyl phosphite (the alkyl having approximately 12-15 carbon atoms), 4,4'-isopropylidenebis(2-t-butylphenol) di(nonylphenyl) phosphite, tris(biphenyl) phosphite, tetra (tridecyl)-1,1,3-tris(2-methyl-5-t-butyl-4-hydroxyphenyl)butane diphosphite, tris(3,5-di-t-butyl-4-hydroxyphenyl) phosphite, hydrogenated 4,4'-isopropylidenediphenol polyphosphite, bis(octylphenyl) bis[4,4'-butylidenebis(3-methyl-6-t-butylphenol)] 1,6-hexanediol diphosphite, hexatridecyl-1,1,3-tris(2-methyl-4-hydroxy-5-t-butylphenol) diphosphite, tris [4,4'-isopropylidenebis(2-t-butylphenol)] phosphite, tris(1,3-distearoyloxyisopropyl) phosphite, 9,10-dihydro-9-phosphaphenanthrene-10-oxide, tetrakis(2,4-di-t-butylphenyl)-4,4'-biphenylene diphosphonite, distearyl pentaerythritol diphosphite, di(nonylphenyl) pentaerythritol diphosphite, phenyl 4,4'-isopropylidenediphenol pentaerythritol diphosphite, bis(2,4-di-t-butylphenyl) pentaerythritol diphosphite, bis(2,6-di-t-butyl-4-methylphenyl) pentaerythritol diphosphite, and phenyl bisphenol-A pentaerythritol diphosphite.

Of these, tris(2,4-di-t-butylphenyl) phosphite, tris(nonylphenyl) phosphite, and tetrakis(2,4-di-t-butylphenyl)-4,4'-biphenylene diphosphite are preferred, with tris(2,4-di-t-butylphenyl) phosphite being particularly preferred.

Preferably employed organic thioether stabilizers are dialkyl thiodipropionates and polyhydric alcohol esters of an alkylthiopropionic acid.

Dialkyl thiodipropionates containing C6-C20 alkyl groups are preferably used as the dialkyl thiodipropionates. Polyhydric alcohol esters of an alkylthiopropionic acid containing C4-C20 alkyl groups are preferably used as the polyhydric alcohol esters of an alkylthiopropionic acid.

Examples of the polyhydric alcohol forming esters thereof includes glycerin, trimethylolethane, trimethylolpropane, pentaerythritol, and trishydroxyethyl isocyanurate.

Examples of the dialkyl thiodipropionate forming esters thereof include dilauryl thiodipropionate, dimyristyl thiodipropionate, and distearyl thiodipropionate.

Examples of the polyhydric alcohol esters of an alkylthiopropionic acid include glycerin tributylthiopropionate, glycerin trioctylthiopropionate, glycerin trilaurylthiopropionate, glycerin tristearylthiopropionate, trimethylolethane tributylthiopropionate, trimethylolethane trioctylthiopropionate, trimethylolethane trilaurylthiopropionate, trimethylolethane tristearylthiopropionate, pentaerythritol tetrabutylthiopropionate, pentaerythritol tetraoctylthiopropionate, pentaerythritol tetralaurylthiopropionate, and pentaerythritol tetrastearylthiopropionate.

Of these, dilauryl thiodipropionate, distearyl thiodipropionate, and pentaerythritol tetralaurylthiopropionate are preferred.

Examples of the hindered amine stabilizers include bis(2,2,6,6-tetramethyl-4-piperidyl) sebacate, (dimethyl succinate)-1-(2-hydroxyethyl)-4-hydroxy-2,2,6,6-tetramethylpiperidine polycondensate, poly[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino], tetrakis(2,2,6,6-tetramethyl-4-piperidyl) 1,2,3,4-butanetetracarboxylate, 2,2,6,6-tetramethyl-4-piperidyl benzoate, bis(1,2,6,6-pentamethyl-4-piperidyl)-2-(3,5-di-t-butyl-4-hydroxybenzyl)-2-n-butyl malonate, bis(N-methyl-2,2,6,6-tetramethyl-4-piperidyl) sebacate, 1,1'-(1,2-ethanediyl)bis(3,3,5,5-tetramethylpiperazinone), (2,2,6,6-tetramethyl-4-piperidyl/tridecyl) 1,2,3,4-butanetetracalboxylate mixture, (1,2,2,6,6-pentamethyl-4-piperidyl/tridecyl) 1,2,3,4-butanetetracalboxylate mixture, [2,2,6,6-tetramethyl-4-piperidyl/$\beta,\beta,\beta',\beta'$-tetramethyl-3,9-[2,4,8,10-tetraoxaspiro(5,5)undecane]diethyl] 1,2,3,4-butanetetracalboxylate mixture, [1,2,2,6,6-pentamethyl-4-piperidyl/$\beta,\beta,\beta',\beta'$-tetramethyl-3,9-[2,4,8,10-tetraoxaspiro(5,5)undecane]diethyl] 1,2,3,4-butanetetracalboxylate mixture, N,N'-bis(3-aminopropyl)ethylenediamine-2,4-bis[N-butyl-N-(1,2,2,6,6-pentamethyl-9-piperidyl)amino]-6-chloro-1,3,5-triazine condensate, poly[6-N-morpholyl-1,3,5-triazine-2,4-diyl][(2,2,6,6-tetramethyl-4-piperidyl)imino]hexamethylene[(2,2,6,6-tetramethyl-4-piperidyl)imide], condensate of N,N'-bis(2,2,6,6-tetramethyl-4-piperidyl)hexamethylenediamine and 1,2-dibromoethane, and [N-(2,2,6,6-tetramethyl-4-piperidyl)-2-methyl-2-(2,2,6,6-tetramethyl-4-piperidyl)imino]propionamide.

Among these hindered amine stabilizers, dimethyl succinate-1-(2-hydroxyethyl)-4-hydroxy-2,2,6,6-tetramethylpiperidine polycondensate, poly[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino], tetrakis(2,2,6,6-tetramethyl-4-piperidyl) 1,2,3,4-butanetetracarboxylate, bis(1,2,6,6-pentamethyl-4-piperidyl)-2-(3,5-di-t-butyl-4-hydroxybenzyl)-2-n-butyl malonate, 1,1'-(1,2-ethanediyl)bis(3,3,5,5-tetramethylpiperazinone, 2,2,6,6-tetramethyl-4-piperidyl/tridecyl) 1,2,3,4-butanetetracarboxylate mixture, (1,2,2,6,6-pentamethyl-4-piperidyl/tridecyl) 1,2,3,4-butanetetracarboxylate mixture, [2,2,6,6-tetramethyl-4-piperidyl/$\beta,\beta,\beta',\beta'$-tetramethyl-3,9-[2,4,8,10-tetraoxaspiro(5,5)undecane]diethyl] 1,2,3,4-butanetetracarboxylate mixture, [1,2,2,6,6-pentamethyl-4-piperidyl/$\beta,\beta,\beta',\beta'$-tetramethyl-3,9-[2,4,8,10-tetraoxyspiro(5,5)undecane]diethyl] 1,2,3,4-butanetetracarboxylate mixture, N,N'-bis(3-aminopropyl)ethylenediamine-2,4-bis[N-butyl-N-(1,2,6,6-pentamethyl-4-piperidyl)amino]-6-chloro-1,3,5-triazine condensate, poly[6-N-morpholyl-1,3,5-triazine-2,4-diyl][(2,2,6,6-tetramethyl-9-piperidyl)imino]hexamethylene[(2,2,6,6-tetramethyl-4-piperidylimide], condensate of N,N'-bis(2,2,6,6-tetramethyl-4-piperidyl)hexamethylenediamine and 1,2-dibromoethane, and [N-(2,2,6,6-tetramethyl-4-piperidyl)-2-methyl-2-(2,2,6,6-tetramethyl-4-piperidyl)imino]propionamide are particularly preferred.

Into the thus-produced polyethylene resin of the present invention, additives may be incorporated in accordance with needs so long as the objects and effects of the present invention are not impaired. Examples of the additives include neutralizing agents (e.g., metallic soap and hydrotalcite); weather-proof stabilizers; heat-resistant stabilizers; antistatic agents; slip-preventing agents; antiblocking agents; antifogging agents; lubricants; pigments; dyes; nucleating agents; plasticizers; and antiaging agents.

The blown film of the present invention comprises the aforementioned polyethylene resin as an essential component. No particular limitation is imposed on the method of blown film processing, and any conventionally known methods can be employed. Preferred processing conditions include a temperature of 160-340°C and a blow up ratio falling within a range of 1.1 to 6.0.

When the temperature is lower than 160°C, the polyethylene resin might not be sufficiently dissolved, whereas when the temperature is higher than 340°C, the resin is deteriorated, possibly causing reduction in film quality.

When the blow up ratio is less than 1.1 or in excess of 6.0, high-quality (lateral/longitudinal well-balanced) film is difficult to produce.

The thus-produced blown film generally has a thickness of 5-100 µm, preferably 10-60 µm.

The present invention will next be described in more detail by way of examples, which should not be construed as limiting the invention thereto.

Physical properties of the resins were measured through the following methods.

(1) Physical properties of resins

(a) Density

Samples were prepared in accordance with JIS K6922-1 3.3.1, and density was measured in accordance with JIS K7112.

(b) Melt flow rate (MFR)

MFR was measured in accordance with JIS K7210, at 190°C under a load of 21.18 N or 49 N. The MFR measured under a load of 21.18 N is represented by $MFR_2$ and MFR measured under a load of 49 N is represented by $MFR_5$.

As shown in Table 1-1 shown belcw, MFR of a composition comprising polyethylene (A) and polyethylene (B) is represented by $MFR_5$.

The reason therefor is that when the composition having a high molecular weight is evaluated in terms of $MFR_2$, measurement requires a long period of time, thereby possibly deteriorating the resin during measurement.

(c) Method of calculating $\alpha$-olefin content (amounts of units originating from $\alpha$-olefin)

Assignment of nuclear magnetic resonance spectra ($^{13}$C-NMR) and quantitative determination of $\alpha$-olefin units were carried out in accordance with methods described in *J. Appl. Polym. Sci.* Vol. 42, p. 399 (1991).

A sample (220 mg) was placed in an NMR sample tube (diameter: 10 mm), and a 1,2,4-trichlorobenzene/ heavy benzene (90/10 vol.%) mixture solvent (3 mL) was added to the sample. The sample was dissolved at 140°C so as to obtain a uniform solution by use of an aluminum block heater.

The sample tube was placed in EX-400 (JEOL Ltd.), and nuclear magnetic resonance spectra ($^{13}$C-NMR) were measured through a proton complete decoupling method under the following conditions.

(Measurement conditions)

Pulse width: 9.2 µs (45° pulse)
Spectrum width: 25,000 Hz
Measurement temperature: 130°C
Pulse repeating time: 4 sec
Integration: 1,000 to 10,000 times

(d) Long-term relaxation component index

The long-term relaxation component index of a sample is determined from the GPC curve and the storage modulus G'(ω) value obtained through measurement. Specifically, on the basis of the relationship between the molecular weight and the integral curve obtained through GPC, the following equations:

$$1/\omega = A \times M^B$$

and

$$G'_{cal}(\omega) = G_N^0 W^2$$

(wherein the parameters denote: ω); frequency (rad/sec), M; molecular weight, $A = 10^{-20}$, $B = 3.4$, $G_N^0 = 2.4 \times 10^6$ (Pa), and W; weight fraction of the component having a molecular weight of M or more) are employed to calculate the value of the storage modulus G' at ω = 0.01; $G'_{cal}(0.01)$.

The long-term relaxation component index D was calculated on the basis of the following equation:

$$D = G'(0.01)/G'_{cal}(0.01),$$

wherein $G'_{cal}(0.01)$ is a calculated value and $G'(0.01)$ is a storage modulus measured at $\omega = 0.01$ (rad/sec).

$G'_{cal}$ is a storage modulus G' calculated from a relaxation spectrum of a typical linear polymer, the spectrum being predicted from the molecular weight distribution of the polymer [reference: W. H. Tuminello, W. H. Buck, and D. L. Kerbow, *Macromolecules*, 26, 499 (1993)].

Measurement through GPC was carried out under the following conditions:

High-temperature GPC: Waters 150CV+,
GPC column: Shodex UT-806M (x2),
Solvent: 1,2,4-trichlorobenzene,
Temperature: 145°C,
Flow rate: 1.0 ml/min,
Calibration curve: universal calibration,
Detector: RI (Waters 150C), and
Concentration of sample: 0.2% (W/V).

For the analysis of data, GPC-PRO software (Ver. 3.12) (product of VISCOTEK) was employed.

Storage modulus G' was measured through the following method.

A resin sample was melted at 190°C over three minutes, and the molten resin was degassed for 30 seconds. The sample was compression-molded, to thereby yield sheet samples (thickness: 1 mm). Each sheet sample was cooled, and sandwiched between two plates. Dynamic strain was applied to the sample under the following conditions: 190°C, a strain of 15%, and a gap between the plates of 1.15 mm. Frequency dependency of storage modulus G' was measured (apparatus: ARES, product of Rheometric).

(e) Strain hardening index

Strain hardening index A was measured by means of a stretch rheometer (product of Iwamoto Seisaku-sho). A cylindrical sample (30 cm (length) $\times$ 3 mm (diameter)) prepared by use of a 20-mm$\phi$ small extruder (product of Toyo Seiki Seisaku-sho, rotation speed: 5 rpm, preset temperature: 190°C) was used. The sample was allowed to stand in silicone oil at 150°C for 15 minutes, and the thus-treated sample was set between by rotatable rollers. After removal of sagging of the sample, the sample was stretched at a predetermined roller speed, and time-elapsed changes in tension and sample diameter were measured.

Strain rate can be calculated from the time-elapsed change in diameter on the basis of the following formula:

$$\ln[d(t)/d_0] = -(\varepsilon/2)t$$

[$d_0$: initial diameter, $d(t)$: diameter t seconds after, and $\varepsilon$: strain rate].

Measurement of $d(t)$ was performed by means of a video apparatus equipped with a timer.

Elongational viscosity can be calculated from the strain rate on the basis of the following equation:

$$Z(\varepsilon, t) = S(t)/\varepsilon$$

[$S(t)$: elongational stress calculated from tension $F(t)$ and $d(t)$ (t seconds after), and $S(t) = $ tension $F(t)/[\pi(d(t)/2)^2]$].

Strain hardening index A can be calculated from a predetermined elongational viscosity, provided at a measurement temperature of 150°C and a constant strain rate of 0.05 sec$^{-1}$, on the basis of the following equation:

$$A = Z_{50}/Z_{10}$$

[wherein $Z_{10}$ and $Z_{50}$ represent elongational viscosity values (10 seconds after and 50 seconds after, respectively) at 150°C and a constant strain rate of 0.05 sec$^{-1}$].

(f) Percentage of boiling-hexane-soluble components

Percentage of boiling-hexane-soluble components is measured through the following method. Specifically, polyethylene resin pellets are pulverized to a maximum size of ≤2 mm by means of a pulverizer equipped with a rotary cutter (product of Kasuga). The thus-pulverized product (approximately 3 g) is subjected to Soxhlet's extraction by use of boiling hexane for six hours while the reflux time is controlled such that a siphon phenomenon occurs approximately once a minute.

After completion of extraction, remaining polyethylene is dried at 70°C for three hours, followed by cooling to room temperature and measurement of the weight.

Percentage of boiling-hexane-soluble components (%) was obtained on the basis of the following formula:

$$(W_1 - W_2)/W_1 \times 100,$$

wherein $W_1$ is the weight of pulverized polyethylene before extraction and $W_2$ is that after extraction.

Film processability and physical properties of the processed film were measured through the following method.

(2) Film processability

(a) Blown film processing conditions

Extruder: Placo NLM (50 mmφ)
  Die type: Placo SG-11-100 F6 special
    Lip portion: outer diameter (100 mmφ), gap (1.2 mm), and land length (20 mm)
    Spiral portion: outer diameter (110 mmφ), number of spirals (6)
  Amount of extrusion: 56 kg/hr
  Take-up speed: 42 m/min
  Film folding span: 500 mm
  Film thickness: 20 μm
  Preset temperature: 200°C
  Blow up ratio: 3.4

(b) Bubble stability

Blown film processing is performed under the above conditions, and shaking of the molten bubble is visually observed. Bubble stability was rated "O" when the bubble was stable without vibration, and "X" when the bubble vibrated vigorously.

(3) Physical properties of film

(a) Non-uniformity in film thickness

The thickness of film was continuously measured along the circumferential direction, and the standard deviation of the measured thickness values was obtained. Unevenness in film thickness was evaluated by the standard deviation.

(b) Impact strength

After resin films had been formed through blown film processing, the film samples were allowed to stand under conditions corresponding to a JIS standard temperature state (2nd grade) (23 ± 2°C) and a JIS standard moisture state (2nd grade) (50 ± 5% RH) for 24 hours or longer. Subsequently, impact strength of each sample was measured by use of a film impact tester (product of Toyo Seiki Seisaku-sho). The hammer capacity was adjusted to 294 N·cm.

(c) Gels (FEs)

The term FEs refers to spherical nodes and stripes generated on film surfaces. The number of FEs in 1,000 $cm^2$ area of the blown film was visually counted while the film was held to a fluorescent lamp.

(4) Method of producing polyethylene resin powder

(a) Production of catalyst component

1. Preparation of solid substance

A glass reactor (capacity: 0.5 L) equipped with an agitator was sufficiently purged with nitrogen. Metallic magnesium (8 g), ethanol (121 g), and iodine (0.1 g) were fed into the reactor, and the mixture was allowed to react with stirring under reflux until generation of hydrogen gas from the system was stopped, to thereby yield a solid product.
A reaction mixture containing the solid product was dried under reduced pressure, to thereby yield a solid. The solid (25 g) was pulverized with hexane (200 mL) by means of a stainless steel ball mill (capacity: 400 mL, diameter of stainless steel ball: 1.2 cm, number of balls: 100) for 10 hours. Hexane was removed through distillation under reduced pressure, to thereby yield a solid substance having a mean particle size of 4.4 μm and a maximum particle size of 11.0 μm (measured through a laser scan analysis method by means of a particle size distribution analyzer (model CIS-1, product of GALAI)).

2. Preparation of solid catalyst component

Into a three-neck glass flask (capacity: 0.5 l) which had been sufficiently purged with nitrogen gas, the above-produced solid substance (15 g) and dehydrated hexane (350 mL) were fed. Silicon tetrachloride (3.8 mL) and ethanol (3.8 mL) were added to the flask under stirring, and the resultant mixture was allowed to react at 70°C for two hours.
Subsequently, titanium tetrachloride (20 mL) was added to the reaction mixture, and the resultant mixture was allowed to react 70°C for six hours. The thus-yielded reaction mixture was washed with hexane, to thereby yield a solid catalyst component. The titanium content of the solid catalyst component was found to be 44 mg/g, as measured through colorimetry.

(b) Method of producing polyethylene resin powder I

A first polymerization step was carried out in the following manner. Specifically, ethylene (6.0 kg/h), hexane (17 L/h), and hydrogen (70 L/h) were continuously fed to a polymerization reactor (capacity: 200 L) equipped with an agitator. Simultaneously, the above-described solid catalyst component (1 mmol/h as reduced to Ti), triethylaluminum (2.8 mmol/h), and diethylaluminum chloride (30.2 mmol/h) were fed to the polymerization reactor. Polymerization was continuously carried out at 80°C for a residence time of 3.5 hours.
A suspension of the thus-yielded polyethylene in hexane was transferred at 80°C to a hydrogen-removal vessel, whereby hydrogen was removed. Subsequently, the entire suspension was transferred to a second polymerization reactor (capacity: 200 L).
To the second polymerization reactor, ethylene (5.3 kg/h), hexane (15.1 L/h), butene-1 (280 g/h), and hydrogen (0.1 L/h) were further fed. Polymerization was continuously carried out at 80°C for a residence time of 2.6 hours, to thereby yield an ethylene polymer (ethylene-butene-1 copolymer).
A suspension of the thus-produced ethylene copolymer in hexane was subjected to solid-liquid separation at 60°C by means of a centrifuge, to thereby remove a wet powder cake.
The thus-obtained powder was continuously dried by means of a powder drier (controlled to 100°C) for a residence time of one hour.
A portion of the dried polyethylene resin powder I was removed from the drier and subjected to measurement of physical properties. Through measurement, the polyethylene resin was found to have a density of 949 kg/m$^3$, an MFR$_5$ (190°C, under a load of 49 N) of 0.20 g/10 min, and a butene-1-originating unit content of 0.45 mol% (see Table 1-1).
The polyethylene resin (after completion of the first polymerization) was removed and dried. The density and MFR$_2$ (at 190°C, under a load of 21.18 N) were measured.
The ratio of the amount of the polymer yielded in the first polymerization step (polymer (A)) to that of the polymer yielded in the second polymerization step (polymer (B)) was calculated from the amount of ethylene fed for polymerization.
The results are also shown in Table 1-1.

(c) Method of producing polyethylene resin powder II

The procedure of the method of producing polyethylene resin powder I was repeated, except that ethylene (5.1 kg/h), hexane (14.5 L/h), butene-1 (200 g/h), and hydrogen (0.1 L/h) were fed in the second polymerization step and that the residence time was altered to 2.4 hours, to thereby yield polyethylene resin powder II.

The dried polyethylene resin powder II was removed from the drier and subjected to measurement of physical properties. Through measurement, the polyethylene resin was found to have a density of 952 kg/m$^3$, an MFR$_5$ (190°C, under a load of 49 N) of 0.18 g/10 min, and a butene-1-originating unit content of 0.39 mol% (see Table 1-1).

A portion of the polyethylene resin (after completion of the first polymerization) was removed and dried. The density and MFR$_2$ (at 190°C, under a load of 21.18 N) were measured. The results are also shown in Table 1-1.

(d) Method of producing polyethylene resin powder III

The procedure of the method of producing polyethylene resin powder I was repeated, except that ethylene (5.5 kg/h), hexane (15.7 L/h), butene-1 (80 g/h), and hydrogen (0.1 L/h) were fed in the second polymerization step and that the residence time was altered to 2.8 hours, to thereby yield polyethylene resin powder III.

The dried polyethylene resin powder III was removed from the drier and subjected to measurement of physical properties. Through measurement, the polyethylene resin was found to have a density of 956 kg/m$^3$, an MFR$_5$ (190°C, under a load of 49 N) of 0.24 g/10 min, and a butene-1-originating unit content of 0.25 mol% (see Table 1-1).

A portion of the polyethylene resin (after completion of the first polymerization) was removed and dried. The density and MFR$_2$ (at 190°C, under a load of 21.18 N) were measured. The results are also shown in Table 1-1.

Example 1

Polyethylene resin powder I was blended with Irgaphos 168 (antioxidant, product of Ciba Specialty Chemicals, K. K.) (1,000 ppm), Irganox 1010 (antioxidant, product of Ciba Specialty Chemicals, K. K.) (500 ppm), and calcium stearate (neutralizing agent) (3,000 ppm), and the resultant mixture was continuously fed to a hopper of a tandem-type twin screw knead-extruder. The above procedure was carried out such that the polyethylene resin powder I had never come into contact with air.

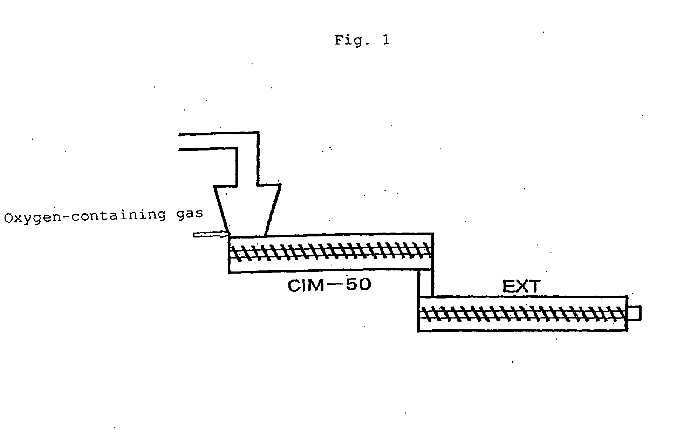

As shown in Fig. 1, a first extruder is CIM-50 (twin screw kneader, products of Nihon Seiko-sho) and a second extruder is P65-13SW (single screw extruder, products of Nihon Seiko-sho).

As shown in Table 1-2, the oxygen concentration at addition to a hopper of the first extruder was caused to be varied, and the concentration-controlled oxygen-containing gas was fed to the extruder. At each oxygen concentration, the resin was melt-kneaded by means of the kneader, and the resultant resin was strand-cut, to form the resin pellets. Four types of pellets were obtained.

Table 1-2 shows kneading & extrusion conditions, and Fig. 1 shows a sketch of the extruder employed in Example 1.

The thus-produced polyethylene resin samples were subjected to blown film processing under the aforementioned conditions.

Physical properties of the four types of polyethylene resin samples and those of the film samples obtained from the resin samples were evaluated and the results are shown in Table 1-3.

Example 2

The procedure of Example 1 was repeated, except that polyethylene resin powders II and III shown in Table 1-1 were used and that conditions 1 shown in Table 1-2 were employed, to thereby yield two types of polyethylene resin pellets. The results are shown in Table 2.

Example 3

Polyethylene resin powder I was blended with Irgaphos 168 (antioxidant, product of Ciba Specialty Chemicals, K. K.) (900 ppm), Irganox 1010 (antioxidant, product of Ciba Specialty Chemicals, K. K.) (600 ppm), and calcium stearate (neutralizing agent) (2,800 ppm), and the resultant mixture was collected in a SUS container (capacity: 200 L) which had been purged with nitrogen. The above procedure was carried out such that the polyethylene resin powder I had never come into contact with air.

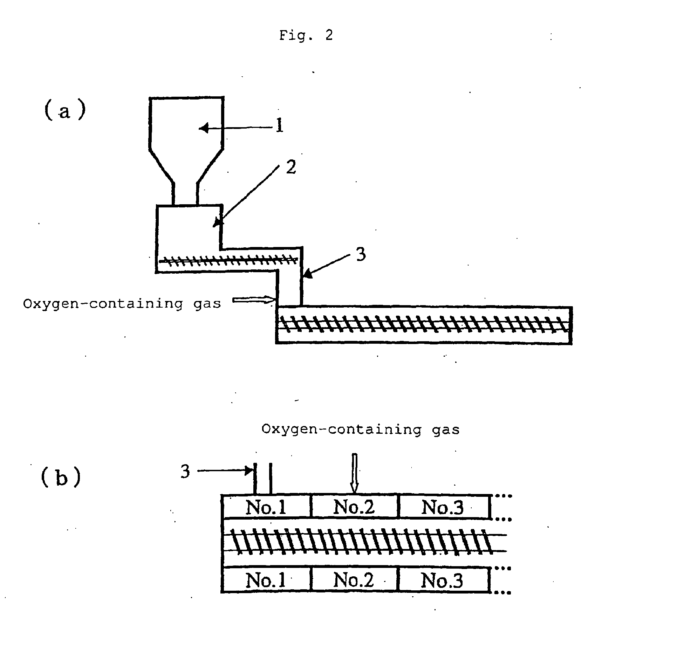

The SUS container containing the collected powder was connected with a feeder of an extruder. After the feeder had been completely purged with nitrogen, pressurized nitrogen was supplied to the container by opening the gate of container, to thereby supply the powder into the feeder (see Fig. 2(a)).

A same-direction-rotation twin screw extruder (TEX-30HSS-32.5PW-2V, products of Nihon Seiko-sho) was employed as the twin screw extruder.

As shown in Table 3-1, the position and oxygen concentration of the gas was caused to be varied, and resin was melt-kneaded and strand-cut, to form pellets of modified polyethylene resin. The oxygen-containing gas was fed from a hopper chute (Fig. 2(a)) or a second cylinder (Fig. 2(b)). The results are shown in Table 3-2.

Fig. 2(a) is a sketch of an extruder employed in Example 3, and Fig. 2(b) is an enlarged view of a portion of the extruder shown in Fig. 2(a). Reference numerals 1, 2, and 3 in Fig. 2 denote a SUS container, a feeder, and a chute, respectively.

Comparative Example

The procedure of Example 1 was repeated, except that polyethylene resin powders I, II, and III shown in Table 1-1 were used and that the oxygen concentration in conditions 1 shown in Table 1-2 was altered to 0%, to thereby yield three types of polyethylene resin pellets. The results are shown in Table 4.

Table 1-1

| | | Polyethylene resin powder | | |
|---|---|---|---|---|
| | | I | II | III |
| Composition | Density (kg/m³) | 949 | 952 | 956 |
| | MFR₅ (g/10 min) | 0.20 | 0.18 | 0.24 |
| | Butene-1-originating unit content (mol%) | 0.45 | 0.39 | 0.25 |
| A | Resin . | Ethylene homopolymer | Ethylene homopolymer | Ethylene homopolymer |
| | MFR₂ (g/10 min) | 950 | 956 | 1020 |
| | Density (kg/m³) | 982 | 982 | 982 |
| B | Resin | Ethylene-1-butene copolymer | Ethylene-1-butene copolymer | Ethylene-1-butene copolymer |
| | No. of α-olefin carbon atoms | 4 | 4 | 4 |
| A : B (wt.) | | 53 : 47 | 54 : 46 | 52 : 48 |

Table 1-2

| Kneading & extrusion conditions of Example 1 (No.) | | 1 | 2 | 3 | 4 |
|---|---|---|---|---|---|
| CIM | Amount of resin extruded (kg/h) | 50 | 50 | 50 | 50 |
| | Rotor rotation speed (rpm) | 1450 | 1450 | 1450 | 1450 |
| | Slot opening (mm) | 2.0 | 2.0 | 2.0 | 2.0 |
| | Chamber conditions (°C: cooled by water) | 50 | 50 | 50 | 50 |
| | Oxygen-containing gas added at | Hopper | Hopper | Hopper | Hopper |
| | Oxygen concentration (vol.%) | 1.0 | 3.0 | 5.0 | 21.0 |
| EXT | Extruder rotation speed (rpm) | 80 | 80 | 80 | 80 |
| | Cylinder temp. preset (°C) | 208 | 208 | 208 | 208 |

Table 1-3

| Experiments in Example 1 (No.) | | 1-1 | 1-2 | 1-3 | 1-4 |
|---|---|---|---|---|---|
| Polyethylene resin powder (No.) | | I | I | I | I |
| Physical properties of polyethylene resin | Density (kg/m$^3$) | 949 | 949 | 949 | 949 |
| | Long-term relaxation component D | 1.6 | 3.9 | 5.5 | 8.8 |
| | Strain hardening index A | 2.8 | 2.8 | 3.0 | 3.9 |
| | Percentage of hexane-soluble components (%) | 0.6 | 0.5 | 0.6 | 0.7 |
| Formability and physical properties of film | Bubble stability | ○ | ○ | ○ | ○ |
| | Impact strength (kJ/m) | 37 | 36 | 31 | 30 |
| | S.D. in thickness (μm) | 1.0 | 1.0 | 1.0 | 1.0 |
| | FE (number) | 31 | 32 | 36 | 42 |

Table 2

| Experiments in Example 2 (No.) | | | 2-1 | 2-2 |
|---|---|---|---|---|
| Polyethylene resin powder (No.) | | | II | III |
| Physical properties of polyethylene resin | | Density (kg/m$^3$) | 952 | 956 |
| | | Long-term relaxation component D | 2.0 | 2.5 |
| | | Strain hardening index A | 2.9 | 2.7 |
| | | Percentage of hexane-soluble components (%) | 0.6 | 0.5 |
| Formability and physical properties of film | | Bubble stability | ○ | ○ |
| | | Impact strength (kJ/m) | 35 | 33 |
| | | S.D. in thickness (μm) | 1.0 | 1.0 |
| | | FE (number) | 24 | 18 |

EP 1 408 055 A1

Table 3-1

| No. | Amount of resin extruded (kg/h) | Rotor rotation speed (min⁻¹) | Cylinder temp. preset (°C) | Oxygen added at | Oxygen concentration (vol. %) |
|---|---|---|---|---|---|
| | | | Kneading & extrusion conditions of Example 3 | | |
| 3-1 | 10 | 280 | 200 | Second cylinder | 2 |
| 3-2 | 10 | 280 | 200 | Second cylinder | 5 |
| 3-3 | 10 | 280 | 200 | Second cylinder | 10 |
| 3-4 | 10 | 280 | 200 | Hopper | 2 |
| 3-5 | 10 | 280 | 200 | Hopper | 5 |
| 3-6 | 10 | 280 | 200 | Hopper | 21 |

EP 1 408 055 A1

Table 3-2

| Experiments in Example 3 (No.) | | 3-1 | 3-2 | 3-3 | 3-4 | 3-5 | 3-6 |
|---|---|---|---|---|---|---|---|
| Polyethylene resin powder (No.) | | I | I | I | I | I | I |
| Physical properties of polyethylene resin | Density (kg/m$^3$) | 949 | 949 | 949 | 949 | 949 | 949 |
| | Long-term relaxation component D | 3.0 | 6.3 | 8.7 | 2.8 | 6.1 | 8.2 |
| | Strain hardening index A | 3.0 | 3.0 | 3.8 | 3.0 | 2.9 | 4.0 |
| | Percentage of hexane-soluble components (%) | 0.7 | 0.6 | 0.6 | 0.7 | 0.5 | 0.6 |
| Formability and physical properties of film | Bubble stability | ○ | ○ | ○ | ○ | ○ | ○ |
| | Impact strength (kJ/m) | 37 | 35 | 31 | 37 | 36 | 44 |
| | S.D. in thickness (μm) | 1.0 | 1.0 | 1.0 | 1.0 | 1.0 | 1.0 |
| | FE (number) | 32 | 37 | 34 | 34 | 36 | 44 |

EP 1 408 055 A1

Table 4

| Experiment in Comparative Example (No.) | | 4-1 | 4-2 | 4-3 |
|---|---|---|---|---|
| Polyethylene resin powder (No.) | | I | II | III |
| Physical properties of polyethylene resin | Density (kg/m$^3$) | 949 | 952 | 956 |
| | Long-term relaxation component D | 1.2 | 1.4 | 1.0 |
| | Strain hardening index A | 2.8 | 2.9 | 2.7 |
| | Percentage of hexane-soluble components (%) | 0.6 | 0.6 | 0.5 |
| Formability and physical properties of film | Bubble stability | ○ | ○ | ○ |
| | Impact strength (kJ/m) | 37 | 35 | 33 |
| | S.D. in thickness (μm) | 2.0 | 1.9 | 2.2 |
| | FE (number) | 31 | 24 | 18 |

Industrial Applicability

According to the present invention, there can be provided a polyethylene resin which exhibits excellent characteristics such as extrudability and bubble stability in the course of blown film processing and which provides blown film having well-balanced physical properties such as impact resistance and, in particular, low unevenness in thickness and having few gels; and a blown film comprising the resin as an essential component, the film having the above-described, well-balanced physical properties, in particular, excellent uniformity in thickness.

**Claims**

1.   A polyethylene resin having a density of 940-970 kg/m$^3$ and a long-term relaxation component index of 1.5-10.

2.   A polyethylene resin as described in claim 1, having a strain hardening index of 1-8.

3.   A polyethylene resin as described in claim 1 or 2, wherein hexane-soluble components are contained in an amount of 1.5 weight% or less.

4.   A polyethylene resin as described in any one of claims 1 to 3, **characterized by** being produced through the following process: an ethylene resin is produced through slurry polymerization in the presence of a Ziegler-type catalyst; the ethylene resin is fed into an extruder substantially prohibiting contact with air; the fed resin is brought into contact with an oxygen-containing gas in the extruder; and the resultant resin is melt-kneaded.

5.   A polyethylene resin as described in any one of claims 1 to 4, wherein the oxygen-containing gas which is to come into contact with the ethylene resin in the extruder has an oxygen concentration of 0.5-50% by volume.

6.   A polyethylene resin as described in any one of claims 1 to 5, wherein an antioxidant is added to the polyethylene resin in an amount of 4,000 ppm or less before the ethylene resin is melted.

7.   A polyethylene resin as described in any one of claims 1 to 6, wherein the extruder is a twin screw extruder.

8.   A polyethylene resin as described in any one of claims 1 to 7, wherein the polyethylene resin contains $\alpha$-olefin having 3-20 carbon atoms, in an amount of 2 mol% or less.

9.   A polyethylene resin as described in any one of claims 1 to 8, wherein the ethylene resin is produced through a continuous multi-step polymerization process including at least the following two steps: polyethylene (A) having a melt flow rate (as measured at 190°C with a load of 21.18 N) of 40-2,000 g/10 min and a density of 930-985 kg/m$^3$ is produced in a first step; and polyethylene (B) is produced in the presence of polyethylene (A) in a second step such that the ratio by weight of polyethylene (A) to polyethylene (B) is adjusted to fall within a range of 30 : 70 to 70 : 30.

10.  A method for producing a polyethylene resin having a density of 940-970 kg/m$^3$ and a long-term relaxation component index of 1.5-10, the method comprising producing an ethylene resin through slurry polymerization in the presence of a Ziegler-type catalyst; feeding the ethylene resin into an extruder substantially prohibiting contact with air; bringing the fed resin into contact with an oxygen-containing gas in the extruder; and melt-kneading the resultant resin.

11.  A method for producing a polyethylene resin as described in claim 10, the polyethylene resin having a density of 940-970 kg/m$^3$, a long-term relaxation component index of 1.5-10, a strain hardening index of 1-8, and hexane-soluble components in an amount of 1.5 weight% or less, the method comprising producing an ethylene resin through slurry polymerization in the presence of a Ziegler-type catalyst; feeding the ethylene resin into an extruder substantially prohibiting contact with air; bringing the fed resin into contact with an oxygen-containing gas in the extruder; and melt-kneading the resultant resin.

12.  A method for producing a polyethylene resin as described in claim 10 or 11, wherein the oxygen-containing gas which is to come into in contact with the ethylene resin in the extruder has an oxygen concentration of 0.5-50% by volume.

**13.** A method for producing a polyethylene resin as described in any one of claims 10 to 12, wherein the polyethylene resin contains α-olefin having 3-20 carbon atoms, in an amount of 2 mol% or less.

**14.** A method for producing a polyethylene resin as described in any one of claims 10 to 13, wherein the ethylene resin is produced through a continuous multi-step polymerization process including at least the following two steps: polyethylene (A) having a melt flow rate (as measured at 190°C with a load of 21.18 N) of 40-2,000 g/10 min and a density of 930-985 kg/m$^3$ is produced in a first step; and polyethylene (B) is produced in the presence of polyethylene (A) in a second step such that the ratio by weight of polyethylene (A) to polyethylene (B) is adjusted to fall within a range of 30 : 70 to 70 : 30.

**15.** A blown film comprising as an essential component a polyethylene resin as recited in any one of claims 1 to 9.

Fig. 1

Oxygen-containing gas

CIM—50

EXT

Fig. 2

(a)

Oxygen-containing gas

Oxygen-containing gas

(b)

EP 1 408 055 A1

# INTERNATIONAL SEARCH REPORT

| International application No. |
| --- |
| PCT/JP02/05513 |

### A. CLASSIFICATION OF SUBJECT MATTER
Int.Cl$^7$ C08F10/02, C08F8/00, C08F297/08, B29B13/02

According to International Patent Classification (IPC) or to both national classification and IPC

### B. FIELDS SEARCHED
Minimum documentation searched (classification system followed by classification symbols)
Int.Cl$^7$ C08F10/00-10/14, 210/00-210/18, C08F8/00-8/50, C08F297/08, B29B13/02

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | EP 0700769 A2 (BP Chemicals Ltd.), 13 March, 1996 (13.03.96), Full description & FR 2723880 A & NO 953384 A & FI 954063 A & JP 8-90633 A & US 5739266 A1 | 1-15 |
| Y | JP 7-276495 A (Showa Denko Kabushiki Kaisha), 24 October, 1995 (24.10.95), Full description (Family: none) | 1-15 |
| Y | JP 7-278228 A (Idemitsu Petrochemical Co., Ltd.), 24 October, 1995 (24.10.95), Full description (Family: none) | 1-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 August, 2002 (23.08.02) | 03 September, 2002 (03.09.02) |

| Name and mailing address of the ISA/ Japanese Patent Office | Authorized officer |
| --- | --- |
| Facsimile No. | Telephone No. |

Form PCT/ISA/210 (second sheet) (July 1998)

<table>
<tr><td colspan="3"><b>INTERNATIONAL SEARCH REPORT</b></td><td>International application No.<br><br>PCT/JP02/05513</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2000-119317 A (Japan Polyolefins Co., Ltd.),<br>25 April, 2000 (25.04.00),<br>Full description<br>(Family: none) | 1-15 |
| Y | JP 61-207404 A (Toyo Soda Manufacturing Co.,<br>Ltd.),<br>13 September, 1986 (13.09.86),<br>Full description<br>(Family: none) | 1-15 |
| Y | JP 1-79204 A (Tosoh Corp.),<br>24 March, 1989 (24.03.89),<br>Full description<br>& EP 350339 A2 & US 4975485 A1<br>& KR 9408983 B | 1-15 |
| Y | JP 11-71427 A (Idemitsu Petrochemical Co., Ltd.),<br>16 March, 1999 (16.03.99),<br>Full description<br>(Family: none) | 1-15 |

Form PCT/ISA/210 (continuation of second sheet) (July 1998)